# EUROPÄISCHE PATENTSCHRIFT

(11) **EP 1 498 448 B1**
(45) Veröffentlichungstag und Bekanntmachung des Hinweises auf die Patenterteilung: **01.12.2010**
(21) Anmeldenummer: 04015724.0
(22) Anmeldetag: 03.07.2004
(51) Int. Cl.: C08K 5/53, C08K 5/5313, C08K 5/34, C08K 5/51, C09K 21/12

(54) **Flammschutzmittel-Zubereitung**
Preparation of flame protection agent
Préparation d'agent antifeu

(30) Priorität: 14.07.2003 DE 10331887
(43) Veröffentlichungstag der Anmeldung: 19.01.2005
(73) Patentinhaber: Clariant Produkte (Deutschland) GmbH, 65929 Frankfurt am Main (DE)
(72) Erfinder: Knop, Susanne, Dr., 22455 Hamburg (DE); Sicken, Martin, Dr., 51149 Köln (DE); Hörold, Sebastian, Dr., 86420 Diedorf (DE)

(56) Entgegenhaltungen:
- WO-A-97/39053
- US-A- 4 078 016
- US-A- 4 087 403
- US-B1- 6 255 371

## Beschreibung

Die vorliegende Erfindung betrifft eine Flammschutzmittel-Zubereitung, ein Verfahren zur Herstellung dieser Flammschutzmittel-Zubereitung sowie deren Verwendung.

Phosphororganische Verbindungen finden Anwendung als Flammschutzmittel für thermoplastische und duroplastische Kunststoffe, wie z.B. Polyamide, Polyester, ungesättigte Polyesterharze und Epoxidharze.

Insbesondere die Salze von Phosphinsäuren (Phosphinate) haben sich als wirksame flammhemmende Zusätze erwiesen; dies gilt sowohl für die Alkalimetallsalze (DE-A-2 252 258) als auch für die Salze anderer Metalle (DE-A-2 447 727).

Calcium- und Aluminiumphosphinate sind in Polyestern als besonders wirksam beschrieben worden und beeinträchtigen die Materialeigenschaften der Polymerformmassen weniger als die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (US-A- 6,255,371, DE-A-196 14 424, DE-A-199 03 707).

Wegen ihrer Brennbarkeit benötigen thermoplastische und duroplastische Kunststoffe, wie z. B. Polyamide, Polyester, ungesättigte Polyesterharze, Epoxidharze und Polyurethane für einige Anwendungen Flammschutzmittel. Zunehmende Anforderungen des Marktes an den Brandschutz und an die Umweltfreundlichkeit von Produkten erhöhen das Interesse an halogenfreien Flammschutzmitteln wie z.B. festen phosphororganischen Flammschutzmitteln oder Kombinationen solcher Produkte mit weiteren Flammschutzmitteln, vorzugsweise stickstoffhaltigen Synergisten oder Phosphor/Stickstoff Flammschutzmitteln.

In den vorgenannten Anwendungsgebieten kann die Verarbeitung der festen phosphororganischen Flammschutzkomponente vor allem dann erschwert sein, wenn im Verarbeitungsprozess flüssige Komponenten zum Einsatz kommen. Es besteht die Gefahr, dass es während der Verarbeitung aufgrund mangelnder Dispergierung oder Benetzung nicht gelingt, das Flammschutzmittel homogen einzuarbeiten.

US-A-4,097,400 beschreibt Mischungen des festen Flammschutzmittels Ammoniumpolyphosphat in Polyolen zur Herstellung von Polyurethanen.

Es bestand somit die Aufgabe, die Verarbeitbarkeit bzw. Dispergierbarkeit von Flammschutzmittelzusammensetzungen zu verbessern. Erfindungsgemäß wird die Aufgabe gelöst, indem die phosphororganische Flammschutzkomponente vor dem Kunststoff-Verarbeitungsprozess mit einer flüssigen Komponente versetzt und homogenisiert wird. Überraschend wurde dabei gefunden, dass die Gleichmäßigkeit der Verteilung der phosphororganischen Flammschutzkomponente im Polymer verbessert wird, wenn man sie als vorbehandelte Zubereitung einsetzt. Die besser verteilten Partikel ergeben eine effektivere Flammschutzwirkung. Weitere Resultate der besseren Partikelverteilung sind eine bessere und ästhetischere Oberflächenbeschaffenheit und -güte. Außerdem können so auch bessere mechanische Eigenschaften des polymeren Werkstoffes erzielt werden.

Die Erfindung betrifft daher Flammschutzmittel-Zubereitungen, welche dadurch gekennzeichnet sind, dass sie als Flammschutzkomponente A 91 bis 99,9 Gew.-% Phosphinsäuresalz der Formel (I) und/oder ein Diphosphinsäuresalz der Formel (II) und/oder deren Polymere, 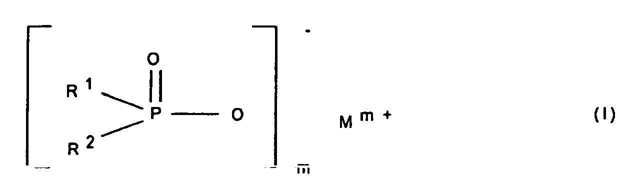 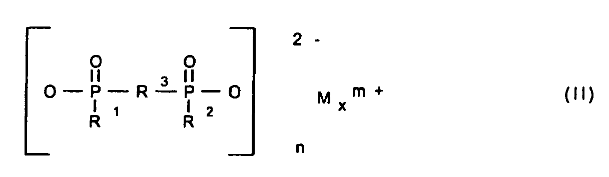 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Aryl-alkylen;
- M: Mg, Ca, Al, Sb, Sn, Ge, Ti, Zn, Fe, Zr, Ce, Bi, Sr, Mn, Li, Na und/oder K;
- m: 1 bis 4;
- n: 1 bis 4;
- x: 1 bis 4
bedeuten, als Komponente B 0 bis 50 Gew.-% eines stickstoffhaltigen Synergisten oder eines Phosphor/Stickstoff Flammschutzmittels sowie als Komponente C 0,1 bis 10 Gew.-% einer flüssigen Komponente enthalten.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphthylen, Ethyl-naphthylen oder tert.-Butylnaphthylen.

Bevorzugt bedeutet R³ auch Phenyl-methylen, Phenyl-ethylen, Phenyl-propylen oder Phenyl-butylen.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden. Erfindungsgemäß sind auch Flammschutzmittel-Zusammensetzungen, die synergistische Kombinationen von den genannten Phosphinaten mit bestimmten Verbindungen, die in einer ganzen Reihe von Polymeren als Flammschutzmittel effektiver wirken als die Phosphinate allein, enthalten. Die Flammschutzwirkung der Phosphinat-Mischungen kann durch Kombination mit weiteren Flammschutzmitteln, vorzugsweise stickstoffhaltigen Synergisten oder Phosphor/Stickstoff Flammschutzmitteln verbessert werden.

Bevorzugt handelt es sich bei den stickstoffhaltigen Synergisten um solche der Formeln (III) bis (VIII) oder Gemische davon, 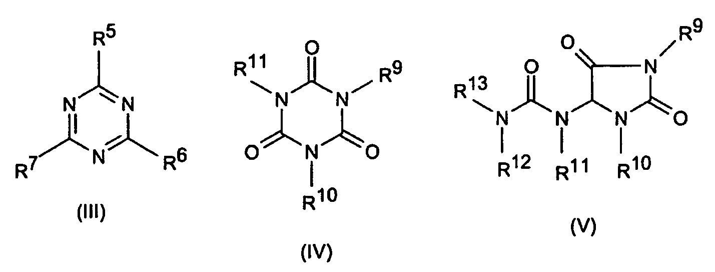 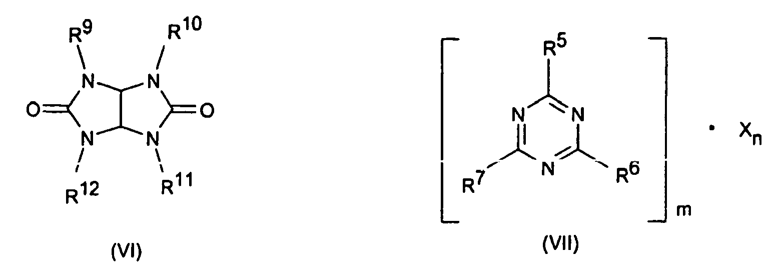 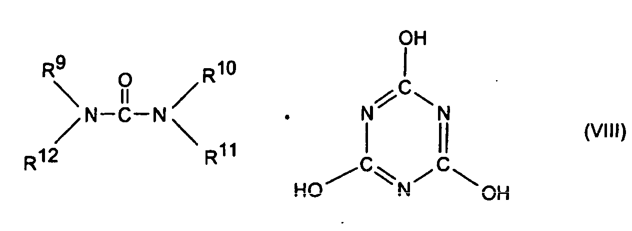 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können, bedeuten;
oder um oligomere Ester des Tris(hydroxyethyl)isocyanurats mit aromatischen Polycarbonsäuren

Bevorzugt handelt es sich bei den stickstoffhaltigen Synergisten um Benzoguanamin, Tris(hydroxyethyl)isocyanurat, Allantoin, Glycouril, Melamin, Melamincyanurat, Dicyandiamid, Guanidin, Carbodiimide, Zinkborat.

Bevorzugt handelt es sich bei den Stickstoff-Synergisten um Kondensationsprodukte des Melamins. Kondensationsprodukte des Melamins sind z.B. Melem, Melam oder Melon bzw. höher kondensierte Verbindungen dieses Typs sowie Gemische derselben und können z.B. durch ein Verfahren hergestellt werden, wie es in WO 96/16948 beschrieben ist.

Bevorzugt handelt es sich bei den Phosphor/Stickstoff Flammschutzmitteln um Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische der genannten Produkte.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z. B. in der WO 98/39306 beschrieben sind.

Besonders bevorzugt handelt es sich bei dem Phosphor/Stickstoff Flammschutzmittel um Melaminpolyphosphat.

Bevorzugt handelt es sich bei den Phosphor/Stickstoff Flammschutzmitteln um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt handelt es sich bei den Phosphor/Stickstoff Flammschutzmitteln um Ammoniumhydrogenphosphat, Ammoniumdihydrogenphosphat oder Ammoniumpolyphosphat.
Als flüssige Komponenten kommen alle Produkte in Frage, die in den jeweiligen Herstell- oder Verarbeitungsverfahren der Kunststoffe eingesetzt werden, bzw. die zusätzlich eingesetzt werden, ohne die oben genannten Prozesse zu stören. Beispiele für solche flüssigen Zusätze sind Monomere, die in Polymerisations-, Polyadditions- oder Polykondensationsreaktionen eingesetzt werden, Lösungsmittel die bei der Kunststoff-Verarbeitung zum Einsatz kommen, flüssige polymere Grundprodukte sowie Stabilisatoren, weitere Flammschutzmittel und sonstige Hilfsmittel.

Geeignete Monomere sind Diole, wie sie bei der Herstellung von Polyestern eingesetzt werden. Beispiele sind Ethylenglykol, 1,2-Propandiol, 1,3-Propandiol und Butandiole.

Geeignete Monomere sind Di- und Polyamine, wie sie bei der Herstellung von Polyamiden verwendet werden. Beispiele sind Ethylendiamin. Propylendiamin sowie Tetra-, Penta- und Hexamethylendiamin.

Geeignete Monomere sind olefinische Verbindungen die in Polymerisationsreaktionen zum Einsatz kommen. Beispiele sind Styrol oder Methylmethacrylat.

Geeignete Monomere sind Diisocyanate, die zur Herstellung von Polyurethanen zum Einsatz kommen. Beispiele sind 2,4-Toluylendiisocyanat (2,4-TDI), 2,6-Toluylendiisocyanat (2,6-TDI), 4,4'-Diisocyanatodiphenylmethan (MDI), Naphthalin-1,5-diisocyanat (NDI), Hexamethylendiisocyanat-1,6 (HDI) und Isophorondiisocyanat (IPDI).

Geeignete flüssige polymere Grundprodukte sind Polyole und Polyisocyanate, die zur Herstellung von Polyurethanen zum Einsatz kommen.

Beispiele für Polyole sind Polyethylenglycole, Polypropylenglykole, Polyetherpolyole und Polyesterpolyole.

Geeignete flüssige polymere Grundprodukte sind Kunstharze, worunter nach DIN 55958 synthetische Harze verstanden werden, die durch Polymerisations-, Polyadditions- oder Polykondensationsreaktion hergestellt werden.

Beispiele sind oligomere und polymere Harze und Härter, wie sie bei der Herstellung von ungesättigten Polyesterharzen zum Einsatz kommen.

Beispiele für solche flüssigen polymeren Grundprodukte sind Lösungen von Polykondensationsprodukten aus gesättigten und ungesättigten Dicarbonsäuren oder deren Anhydriden mit Diolen in copolymerisierbaren Monomeren, vorzugsweise Styrol oder Methylmethacrylat.

Beispiele für flüssige polymere Grundprodukte sind Epoxidgruppen tragende oligomere und polymere Harze und Härter, wie sie bei der Herstellung von Epoxidharzen zum Einsatz kommen.

Beispiele für flüssige Epoxidharze sind aromatische Polyglycidylester wie Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Beispiele für flüssige Härter sind Polyamine wie Triethylentetramin, Aminoethylpiperazin und Isophorondiamin, Polyamidoamine, mehrbasige Säure oder deren Anhydride wie z.B. Phthalsäureanhydrid, Hexahydrophthalsäureanhydrid, Methyltetrahydrophthalsäureanhydrid oder Phenole.

Beispiele für geeignete Lösungsmittel sind Aceton, Methylethylketon, Alkohole wie Methanol, Ethanol, n-Propanol, i-Propanol, n-Butanol, i-Butanol, sek.-Butanol, tert.-Butanol, n-Hexanol, 2-Ethylhexanol, Wasser, Benzol, Toluol, Xylole, Ester, Dimethylformamid, Alkylglykole, Propylenglykolmethyletheracetat, Diethylenglycolethyletheracetat, Polyethylenglycoldimethylether, Ethylacetat, Butylacetat, Dioxan, Tetrahydrofuran, Diethylether, Dimethylether, Methyl-tert.butylether, Alkane, Cycloalkane, N-Methyl-Pyrrolidon, Essigsäure, Essigsäureanhydrid, Ameisensäure, Propionsäure, Benzine, Amylacetat, Pyridin, Schwefelkohlenstoff, Dimethylsulfoxid, Dichlormethan, Trichlormethan, Tetrachlorkohlenstoff, Nitromethan, N-Dimethylacetamid, Nitrobenzol.

Geeignete flüssige Flammschutzmittel sind Triethylphosphat, Triarylphosphate, Resorcindiphosphorsäuretetraphenylester, Dimethylmethylphosphonat und/oder dessen Polymer mit Phosphorpentoxid, Phosphonat-Ester, Methanphosphonsäure(5-ethyl-2-methyl-dioxaphosphorinan-5-yl)methylmethylester, Phosphorsäureester, Phosphorsäurepyroester, Alkylphosphonsäuren und/oder deren oxalkylierten Derivate

Bevorzugt enthält die Flammschutzmittel- Zubereitung 91 bis 99,9 Gew.-% Komponente A, 0 bis 30 Gew.-% Komponente B und 0,1 bis 9 Gew.-% Komponente C.

Besonders bevorzugt enthält die Flammschutzmittel- Zubereitung 93 bis 97 Gew.-% Komponente A, 0,5 bis 20 Gew.-% Komponente B und 3 bis 7 Gew.-% Komponente C.

Besonders bevorzugt sind Mengenverhältnisse, die zu nicht staubenden, gut fließfähigen Pulvern führen. Derartige Zubereitungen lassen sich in der Regel gut verarbeiten.

Gegebenenfalls können bei der Herstellung der Zubereitungen Dispergieradditive eingesetzt werden, um eine noch weiter verbesserte Vordispergierung der Flammschutzmittel zu erreichen.

Zur Verhinderung von Sedimentation können den Zubereitungen auch Stabilisatoren zugesetzt werden. Beispiele für solche Stabilisatoren sind Schichtsilicate und Tonminerale z.B. Bentonite, Montmorillonite, Hectorite, Saponite und gefällte/pyrogene/kristalline/amorphe Kieselsäuren.

Das bevorzugte Verfahren zur Herstellung dieser Flammschutzmittel-Zubereitungen ist die Einmischung der flüssigen Komponente mittels eines Dissolver-, Rühr- oder Mischaggregates.

Die Erfindung betrifft auch eine flammwidrig ausgerüstete thermoplastische Kunststoff-Formmasse, hergestellt durch Einsatz der erfindungsgemäßen Flammschutzmittel-Zubereitung.

Bevorzugt handelt es sich bei dem thermoplastischen Kunststoff um Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol) oder PPE/HIPS (Polyphenylenether/Polystyrol-HI).

Besonders bevorzugt handelt es sich bei dem thermoplastischen Kunststoff um Polyamide, Polyester und PPE/HIPS-Blends.

Bevorzugt enthalten die thermoplastischen Kunststoffe Füllstoffe, wie beispielsweise Glas (bevorzugt in Kugel oder in Faserform), Oxide und/oder Hydroxide der Elemente der zweiten und dritten Hauptgruppe des Periodensystems der Elemente (bevorzugt Aluminium und Magnesium), Schichtsilicate und Tonminerale z. B Bentonite, Montmorillonite, Hectorite, Saponite, gefällte/pyrogene/kristalline/amorphe Kieselsäuren, Kreide.

Bevorzugte Additive sind Synergisten, Antioxidantien, Lichtschutzmittel, Gleitmittel, Farbmittel, Nukleierungsmittel oder Antistatika sein. Beispiele für die verwendbaren Zusätze sind in EP-A-0 584 567 angegeben.

Die Erfindung betrifft auch flammwidrige duroplastische Massen, dadurch gekennzeichnet, dass es sich hierbei um Formmassen, Beschichtungen oder Laminate aus duroplastischen Harzen handelt, die mittels der erfindungsgemäßen Flammschutzmittel-Zubereitung hergestellt wurden.

Bevorzugt handelt es sich bei den duroplastischen Harzen um ungesättigte Polyesterharze, Epoxidharze und Polyurethane.

Ungesättigte Polyesterharze sind Lösungen von Polykondensationsprodukten aus gesättigten und ungesättigten Dicarbonsäuren oder deren Anhydriden mit Diolen in copolymerisierbaren Monomeren, vorzugsweise Styrol oder Methylmethacrylat. UP-Harze werden gehärtet durch radikalische Polymerisation mit Initiatoren (z. B. Peroxiden) und Beschleunigern. Die Doppelbindungen der Polyesterkette reagieren mit der Doppelbindung des copolymerisierbaren Lösungsmittelmonomers. Die wichtigsten Dicarbonsäuren zur Herstellung der Polyester sind Maleinsäureanhydrid, Fumarsäure und Terephthalsäure. Das am häufigsten verwendete Diol ist 1,2 Propandiol. Darüber hinaus werden auch Ethylenglycol, Diethylenglykol und Neopentylglycol u.a. verwendet. Das geeignetste Monomer zur Vernetzung ist Styrol. Styrol ist beliebig mit den Harzen mischbar und lässt sich gut copolymerisieren. Der Styrolgehalt in ungesättigten Polyesterharzen liegt normalerweise zwischen 25 und 40%. Anstelle von Styrol kann auch Methylmethacrylat als Monomeres verwendet werden.

Epoxidharze sind Verbindungen, die durch Polyadditionsreaktion von einer Epoxidharz-Komponente und einer Vernetzungs-(Härter) Komponente hergestellt werden. Als Epoxidharz Komponente werden aromatische Polyglycidylester wie Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen verwendet. Als Härter finden Polyamine wie Triethylentetramin, Aminoethylpiperazin und Isophorondiamin, Polyamidoamine, mehrbasige Säure oder deren Anhydride wie z. B. Phthalsäureanhydrid, Hexahydrophthalsäureanhydrid, Methyltetrahydrophthalsäureanhydrid oder Phenole Verwendung. Die Vernetzung kann auch durch Polymerisation unter Verwendung geeigneter Katalysatoren erfolgen.

Epoxidharze sind geeignet zum Verguss von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Epoxidharze für Leiterplatten werden nach dem bisherigen Stand der Technik durch Einreagieren bromhaltiger aromatischen Verbindungen, insbesondere Tetrabrombisphenol A, flammwidrig eingestellt. Nachteilig ist, dass im Brandfall Bromwasserstoff (Gefahrstoff!) freigesetzt wird, was zu Schäden durch Korrosion führen kann. Unter ungünstigen Bedingungen können auch polybromierte Dibenzodioxine und Furane entstehen. Die Verwendung von Aluminiumhydroxid scheidet wegen der bei der Verarbeitung erfolgenden Wasserabspaltung vollständig aus.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.

Je nach Brandschutzanforderungen müssen die Materialien horizontale Brenntests (Klasse UL 94 HB) oder die strengeren vertikalen Tests (UL 94 V2, V1 oder V-0) bestehen. Diese Prüfungen simulieren Zündquellen geringer Energie, die in Elektrogeräten auftreten und auf Kunststoffteile elektrischer Baugruppen einwirken können.

Die erfindungsgemäßen Flammschutzmittel-Zubereitungen werden bevorzugt in Compounds angewendet, die weiter zur Erzeugung von Polymer-Formkörpern verwendet werden.

Erfindungsgemäß sind auch Polymer-Formkörper, die auf Basis der erfindungsgemäßen Flammschutzmittelzubereitung hergestellt worden sind.
Die Einarbeitung der Flammschutzmittel-Zubereitung in duroplastische Kunststoffe erfolgt durch homogene Vermischung mit den entsprechenden Harz/Härter-Systemen und anschließende Härtung und Formgebung.

Die Flammschutzmittelzubereitungen können in thermoplastische Polymere eingearbeitet werden, indem z.B. alle Bestandteile in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die Flammschutzmittelzubereitungen einem fertigen Polymergranulat bzw. -pulver beizumischen und die Mischung direkt auf einer Spritzgussmaschine zu Formteilen zu verarbeiten.

Als universell einsetzbare Möglichkeit, die Flammwidrigkeit von Werkstoffen zu bestimmen hat sich die Bestimmung des sogenannten Sauerstoffindexes bewährt. In dieser Testanordnung wird anhand eines vertikal angeordneten Prüfkörpers die Grenz-Sauerstoffkonzentration eines vertikal verlaufenden Abbrandes ermittelt. Der Sauerstoffindex (LOI) wurde in einer modifizierten Apparatur in Anlehnung an ASTM_D 2863-74 bestimmt.

### Beispiele:

### Eingesetzte Komponenten:

®Alpolit SUP 403 BMT (Vianova Resins GmbH, Wiesbaden), ungesättigtes Polyesterharz, ca. 57%ig in Styrol, Säurezahl max. 30 mgKOH/g, vorbeschleunigt und schwach thixotrop eingestellt, niedrigviskos (Viskosität im Auslaufbecher 4 mm: 110 ± 10 s) und stark reduzierte Styrolemissionen.

®Palatal 340 S (DSM-BASF Structural Resins, Ludwigshafen) ungesättigtes Polyesterharz, ca. 49%ig in Styrol und Methylmethacrylat, Dichte 1,08 g/ml, Säurezahl 7 mgKOH/g, vorbeschleunigt, niedrigviskos (dynamische Viskosität ca. 50 mPa*s).

®Beckopox EP 140 (Vianova Resins GmbH, Wiesbaden), niedrigmolekulares Kondensationsprodukt aus Bisphenol A und Epichlorhydrin mit einer Dichte von 1,16 g/ml und einem Epoxidäquivalent von 180-192

®Beckopox EH 625 (Vianova Resins GmbH, Wiesbaden), modifiziertes aliphatisches Polyamin mit einem H-Aktiväquivalentgewicht von 73 und einer dynamischen Viskosität von ca. 1000 mPa*s

Kobaltbeschleuniger NL 49P (Akzo Chemie GmbH, Düren) Kobaltoktoatlösung in Dibutylphthalat mit einem Kobaltgehalt von 1 Masse %

Butanox M 50 (Akzo Chemie GmbH, Düren) Methylethylketonperoxid, mit Dimethylphtalat phlegmatisiert, klare Flüssigkeit mit einem Aktiv-Sauerstoffgehalt von mind. 9 Masse %.

Dowanol PMA (Fa. Dow), Propylenglykolmethyletheracetat

®Durethan AKV 30 (Fa. Bayer AG, D), Polyamid 6.6 (PA 6.6-GV), enthält 30 % Glasfasern.

®Celanex 2300 GV1/30 (Fa. Ticona, D) Polybutylenterephthalat (PBT-GV), enthält 30 % Glasfasern.

Aluminiumsalz der Diethylphosphinsäure, im folgenden als DEPAL bezeichnet.

®Melapur 200 (Melaminpolyphosphat), im folgenden als MPP bezeichnet, Fa. DSM Melapur, NL

### Beispiele 1 bis 9

Mit Hilfe einer Mischapparatur wurden Flammschutzmittel-Zubereitungen hergestellt, indem die feste Komponente vorgelegt wurde und unter gleichmäßigem Schütteln über 10 min die Flüssigkeit eingetragen wurde.

**Tabelle 1: Flammschutzmittel-Zubereitungen**

| Bsp. | Feststoff (Komponente A bzw. A + B) | Gew.-% | Flüssigkeit (Komponente C) | Gew.-% |
|---|---|---|---|---|
| 1 | DEPAL | 98 | ^{®}Alpolit SUP 403 BMT | 2 |
| 2 | DEPAL | 95 | DMF | 5 |
| 3 | DEPAL | 91 | Styrol | 9 |
| 4 | DEPAL | 95 | ^{®}Beckopox EP 140 | 5 |
| 5 | DEPAL | 95 | Methylethylketon | 5 |
| 6 | DEPAL | 95 | Toluol | 5 |
| 7 | DEPAL | 95 | Dowanol PMA | 5 |
| 8 | DEPAL | 95 | Resorcindiphosphorsäuretetraphenylester | 5 |
| 9 | DEPAL/MPP (1:1) | 95 | Resorcindiphosphorsäuretetraphenylester | 5 |

### Beispiele 10 - 11 (Vergleich)

Das ungesättigte Polyesterharz wird zunächst mit dem Kobaltbeschleuniger, anschließend mit dem Flammschutzmittel-Feststoff (Komponente A) mit einer Dissolverscheibe vermischt. Nach Zugabe des Peroxidhärters Butanox M 50 wird nochmals homogenisiert. In einer beheizten Presse werden auf einer ®Hostaphan Trennfolie und einem Stahlrahmen zwei Lagen Textilglas-Endlosmatte vom Flächengewicht 450 g/m² eingelegt. Anschließend wird etwa die Hälfte des Harz-Flammschutzmittel-Gemisches gleichmäßig verteilt. Nach Zugabe einer weiteren Glasmatte wird das restliche Harz-Flammschutzmittel-Gemisch verteilt, das Laminat mit einer Trennfolie abgedeckt und bei einer Temperatur von 50°C während einer Stunde bei einem Pressdruck von 10 bar eine Pressplatte von 4 mm Dicke hergestellt.

### Beispiele 12 - 15

Die Herstellung erfolgt analog Beispiel 10, nur wird abweichend die Flammschutzmittelzubereitung statt des Flammschutzmittel-Feststoffs (Komponente A) eingesetzt.

Tabelle 2 zeigt Vergleichsbeispiele zur Verwendung von DEPAL als Flammschutzmittel für ungesättigte Polyesterharze (Viapal UP 403 BMT und ®Alpolit SUP 403 BMT). Aus der Tabelle ist zu entnehmen, dass beim Einsatz von 25 Teilen festem DEPAL pro 100 Teile ungesättigtes Polyesterharz (Vergleichsbeispiele 10 - 11) relativ niedrige Werte für den Sauerstoff-Index (LOI) erhalten werden und eine raue, fleckige Oberfläche zu beobachten ist.

Mit dem Einsatz von DEPAL in Form einer Zubereitung (Beispiele 12-15) sind sowohl höhere Sauerstoffindex-Werte (LOI) zu erreichen, als auch eine unbeeinträchtigte Oberflächenbeschaffenheit. Die Laminate können beliebig eingefärbt werden.

**Tabelle 2: Eigenschaften von ungesättigtem Polyester Harz Laminaten, mit 30 Gew.-% Textilglas-Endlosmatte, Härter Butanox M50, Beschleuniger NL 49 P, Endkonzentration jeweils 25 Teile Flammschutzmittel/100 Teile Harz**

| Beispiel | Flammschutz-Dispersion | Harz | Oberfläche | LOI |
|---|---|---|---|---|
| 10 (Vgl.) | DEPAL* | ^{®}Palatal 340 S | Rau/Fleckig | 0,30 |
| 11 (Vgl.) | DEPAL* | ^{®}Alpolit SUP 403 BMT | Rau/Fleckig | 0,32 |
| 12 | Nach Beispiel 1 | ^{®}Palatal 340 S | Glatt/homogen | 0,33 |
| 13 | Nach Beispiel 2 | ^{®}Alpolit SUP 403 BMT | Glatt/homogen | 0,37 |
| 14 | Nach Beispiel 3 | ^{®}Palatal 340 S | Glatt/homogen | 0,33 |
| 15 | Nach Beispiel 3 | ^{®}Alpolit SUP 403 BMT | Glatt/homogen | 0,44 |

| | | | | |
|---|---|---|---|---|
| * als Feststoff | | | | |

### Beispiel 16 (Vergleich)

Das Epoxidharz Beckopox EP 140 wird mit dem Flammschutzmittel-Feststoff mit einer Dissolverscheibe vermischt. Nach Zugabe des Härters Beckopox EH 625 wird nochmals homogenisiert. Das Harz-Flammschutzmittel-Gemisch wird auf eine Stahlplatte aufgebracht und ein Glasseidengewebe mit einem Flächengewicht von 86 g/m² aufgelegt. Anschließend wird weiteres Harz-Flammschutzmittel-Gemisch aufgetragen und eine Lage Glasseidengewebe mit einem Flächengewicht von 390 g/m² aufgelegt. Dieser Vorgang wird weitere viermal wiederholt. Anschließend wird 3 h bei 120°C gehärtet. Es entsteht ein Laminat von etwa 3 mm Dicke.

### Beispiele 17 - 20

Die Herstellung erfolgt analog Beispiel 16, nur wird abweichend die Flammschutzmittelzubereitung statt des Flammschutzmittel-Feststoffs (Komponente A) eingesetzt.

Die Tabelle 3 zeigt Ergebnisse von Epoxidharzlaminaten auf Basis des Harzes Beckopox EP 140 und dem Polyamin-Härter Beckopox EH 625. Mit dem Einsatz des Flammschutzmittels DEPAL in Form einer Zubereitung (Beispiele 17-20) sind sowohl höhere Sauerstoffindex-Werte (LOI) zu erreichen, als auch eine unbeeinträchtigte Oberflächenbeschaffenheit. Die erfindungsgemäßen Laminate bestehen auch eine forcierte Lagerung (1 h/120°C/100 % rel. Feuchte) ohne unerwünschte Delaminierung, die beim Einsatz des Feststoffes zu beobachten ist.

**Tabelle 3: Eigenschaften von Epoxidharz-Formkörpern, Materialstärke 3,0 mm; Harz 100 Teile Beckopox EP 140, Härter 39 Teile Beckopox EH 625, Endkonzentration jeweils 20 Teile Flammschutzmittel/100 Teile Harz**

| Beispiel | Flammschutz-Dispersion | 1 h Lagerung bei 120°C/100% rel. Feuchte | Oberfläche | LOI |
|---|---|---|---|---|
| 16 (Vgl.) | DEPAL* | Delaminierung | Rau/fleckig | 0,30 |
| 17 | Nach Beispiel 4 | Keine Delaminierung | Glatt/homogen | 0,38 |
| 18 | Nach Beispiel 5 | Keine Delaminierung | Glatt/homogen | 0,39 |
| 19 | Nach Beispiel 6 | Keine Delaminierung | Glatt/homogen | 0,39 |
| 20 | Nach Beispiel 7 | Keine Delaminierung | Glatt/homogen | 0,41 |

| | | | | |
|---|---|---|---|---|
| * als Feststoff | | | | |

### Beispiele 21 - 22 (Vergleich)

Das glasfaserverstärkte Polyamid- bzw. PBT-Granulat wurde auf einem Doppelschnecken-Extruder (Typ Leistritz LSM 30/34) bei Temperaturen von 260 bis 310°C (PA 6.6-GV) bzw. von 240 bis 280°C (PBT-GV) extrudiert. Das Flammschutzmittel-Pulver wurde über einen Seiteneinzug in die aufgeschmolzene Polymermasse eindosiert. Der homogenisierte Polymerstrang wurde abgezogen, im Wasserbad gekühlt und anschließend granuliert. Nach ausreichender Trocknung wurden die Formmassen auf einer Spritzgießmaschine (Typ Arburg 320 C Allrounder) bei Massetemperaturen von 270 bis 320°C (PA 6.6-GV) bzw. von 260 bis 280°C (PBT-GV) zu Prüfkörpern verarbeitet.

### Beispiele 23 - 26

Die Herstellung erfolgt analog Beispiel 21, nur wird abweichend die Flammschutzmittelzubereitung statt des Flammschutzmittel-Feststoffs (Komponente A) eingesetzt.

Der Tabelle 4 ist zu entnehmen, dass beim Einsatz von 20 % festem DEPAL (Vergleichsbeispiele 21 - 22) relativ niedrige Werte für den Sauerstoff-Index (LOI) erhalten werden und eine raue, fleckige Oberfläche zu beobachten ist. Mit dem Einsatz von DEPAL in Form von Zubereitungen (Beispiele 23 -26) sind sowohl höhere Sauerstoffindex-Werte (LOI) zu erreichen, als auch eine unbeeinträchtigte Oberflächenbeschaffenheit.

**Tabelle 4: Eigenschaften von Flammschutz-Formkörpern auf Basis von Polyamid (PA 6.6.) bzw. Polybutylenterephthalat (PBT); jeweils 20 % Flammschutzmittelgehalt**

| Beispiel | Flammschutz-Dispersion | Polymer | Oberfläche | LOI |
|---|---|---|---|---|
| 21 (Vgl.) | DEPAL* | ^{®}Celanex 2300 GV1/30 | Rau/fleckig | 0,30 |
| 22 (Vgl.) | DEPAL* | ^{®}Durethan AKV 30 | Rau/fleckig | 0,31 |
| 23 | Nach Beispiel 8 | ^{®}Celanex 2300 GV1/30 | Glatt/homogen | 0,38 |
| 24 | Nach Beispiel 9 | ^{®}Celanex 2300 GV1/30 | Glatt/homogen | 0,38 |
| 25 | Nach Beispiel 8 | ^{®}Durethan AKV 30 | Glatt/homogen | 0,40 |
| 26 | Nach Beispiel 9 | ^{®}Durethan AKV 30 | Glatt/homogen | 0,41 |

### Beispiele 27 - 29 (Erfindung)

Mit Hilfe einer Mischapparatur wurden Flammschutzmittel-Zubereitungen hergestellt, indem die festen Komponenten (DEPAL und MPP) vorgelegt wurde und unter gleichmäßigem Schütteln über 10 min die Flüssigkeit eingetragen wurde.

**Tabelle 5: Flammschutzmittel-Zubereitungen**

| Bsp. | Feststoff (Komponente A bzw. A + B) | Gew.-% | Flüssigkeit (Komponente C) | Gew.-% |
|---|---|---|---|---|
| 27 | DEPAL/MPP | 94/1 | ®Alpolit SUP 403 BMT | 5 |
| 28 | DEPAL/MPP | 92/4 | DMF | 4 |
| 29 | DEPAL/MPP | 91/3 | Styrol | 6 |

Es wurden Laminate analog zu den Beispielen 10 bis 15 hergestellt.

Die Tabelle 6 zeigt Ergebnisse von Epoxidharzlaminaten auf Basis des Harzes Beckopox EP 140 und dem Polyamin-Härter Beckopox EH 625. Mit dem Einsatz des Flammschutzmittels DEPAL plus MPP in Form einer Zubereitung (Beispiele 27-29) sind sowohl höhere Sauerstoffindex-Werte (LOI) zu erreichen, als auch eine unbeeinträchtigte Oberflächenbeschaffenheit. Die erfindungsgemäßen Laminate bestehen auch eine forcierte Lagerung (1 h/120°C/100 % rel. Feuchte) ohne unerwünschte Delaminierung, die beim Einsatz des Feststoffes zu beobachten ist.

**Tabelle 6: Eigenschaften von ungesättigtem Polyester Harz Laminaten, mit 30 Gew.-% Textilglas-Endlosmatte, Härter Butanox M50, Beschleuniger NL 49 P, Endkonzentration jeweils 25 Teile Flammschutzmittel/100 Teile Harz**

| Beispiel | Flammschutz-Dispersion | Harz | Oberfläche | LOI |
|---|---|---|---|---|
| 30 | Nach Beispiel 27 | ^{®}Palatal 340 S | Glatt/homogen | 0,39 |
| 31 | Nach Beispiel 28 | ^{®}Alpolit SUP 403 BMT | Glatt/homogen | 0,38 |
| 32 | Nach Beispiel 29 | ^{®}Palatal 340 S | Glatt/homogen | 0,39 |

## Patentansprüche

1. Flammschutzmittel-Zubereitungen, **dadurch gekennzeichnet, dass** sie als Flammschutzkomponente A **91** bis 99,9 Gew.-% Phosphinsäuresalz der Formel (I) und/oder ein Diphosphinsäuresalz der Formel (II) und/oder deren Polymere, 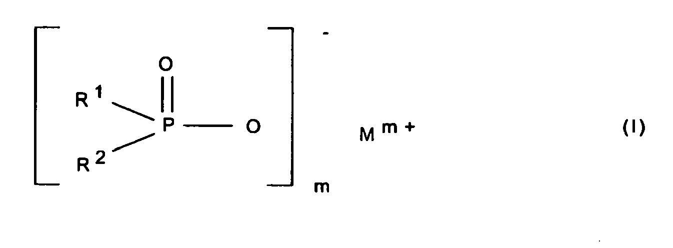 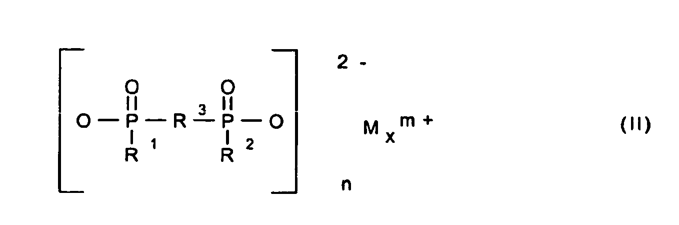 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na und/oder K;
m 1 bis 4;
n 1 bis 4;
x 1 bis 4
bedeuten, als Komponente B 0 bis **30** Gew.-% eines stickstoffhaltigen Synergisten oder eines Phosphor/Stickstoff Flammschutzmittels sowie als Komponente C 0,1 bis **9** Gew.-% einer flüssigen Komponente enthält, wobei es sich dabei um Ethylenglykol, 1,2-Propandiol, 1,3-Propandiol und/oder Butandiole; um Ethylendiamin, Propylendiamin, Tetra-, Penta- und/oder Hexamethylendiamin; um Styrol und/oder Methylmethacrylat; um Polyisocyanate wie 2,4-Toluylendiisocyanat (2,4-TDI), 2,6-Toluylendiisocyanat (2,6-TDI), 4,4'-Diisocyanatodiphenylmethan (MDI), Naphthalin-1,5-diisocyanat (NDI), Hexamethylendiisocyanat-1,6 (HDI) und/oder Isophorondiisocyanat (IPDI); um Polyethylenglykole, Polypropylenglykole, Polyetherpolyole, Polyesterpolyole und/oder Polyisocyanate; um Lösungen von Polykondensationsprodukten aus gesättigten und ungesättigten Dicarbonsäuren und/oder deren Anhydriden mit Diolen in Styrol und/oder Methylmethacrylat; um Aceton, Methylethylketon, Alkohole, Wasser, Toluol, Xylole, Ester, Dimethylformamid, Alkylglykole und/oder Propylenglykolmethyletheracetat Diethylenglycolethyletheracetat, Polyethylenglycoldimethylether, Ethylacetat, Butylacetat, Dioxan, Tetrahydrofuran, Diethylether, Dimethylether, Methyl-tert.-butylether, Alkane, Cycloalkane, N-MethylPyrrolidon, Benzine, Amylacetat, Schwefelkohlenstoff, Dimethylsulfoxid, Dichlormethan, Trichlormethan, Tetrachlorkohlenstoff, Nitromethan, N-Dimethylacetamid, Nitrobenzol; um Triethylphosphat, Triarylphosphate, Resorcindiphosphorsäuretetraphenylester, Dimethylmethylphosphonat und/oder dessen Polymer mit Phosphorpentoxid, Phosphonat-Ester, Methanphosphonsäure(5-ethyl-2-methyl-dioxaphosphorinan-5-yl)methylmethylester, Phosphorsäureester, Phosphorsäurepyroester, Alkylphosphonsäuren und/oder deren oxalkylierten Derivate handelt.

2. Flammschutzmittel-Zubereitung nach Anspruch 1, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

3. Flammschutzmittel-Zubereitung nach **Anspruch 1 oder 2**, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methylnaphthylen, Ethyl-naphthylen oder tert.-Butylnaphthylen; Phenyl-methylen, Phenyl-ethylen, Phenyl-propylen oder Phenyl-butylen bedeutet.

4. Flammschutzmittel-Zubereitung nach einem oder mehreren der Ansprüche 1 bis **3, dadurch gekennzeichnet, dass** es sich bei **der Komponente B** um Melem, Melam, Melon und/oder höherkondensierte Verbindungen davon handelt.

5. Flammschutzmittel-Zubereitung nach einem oder mehreren der Ansprüche 1 bis **3, dadurch gekennzeichnet, dass** es sich bei der Komponente B um Umsetzungsprodukte von Melamin mit Polyphosphorsäure und/oder um Umsetzungsprodukte von Kondensationsprodukten des Melamins mit Polyphosphorsäure oder Gemische davon handelt.

6. Flammschutzmittel-Zubereitung nach Anspruch **5, dadurch gekennzeichnet, dass** es sich bei den Umsetzungsprodukten um Dimelaminpyrophosphat, Melaminpolyphosphat, Melempolyphosphat, Melampolyphosphat, Melonpolyphosphat und/oder gemischte Polysalze dieses Typs handelt.

7. Verfahren zur Herstellung von Flammschutzmittel-Zubereitung gemäß einem oder mehreren der Ansprüche 1 bis **6, dadurch gekennzeichnet, dass** die Einmischung der festen Komponenten mittels eines Dissolver-Rühraggregates bzw. eines Taumelmischers erfolgt

8. Verfahren zur Herstellung von Flammschutzmittel-Zubereitung gemäß einem oder mehreren der Ansprüche 1 bis **6, dadurch gekennzeichnet, dass** Additive eingesetzt werden, **wobei es sich dabei um Schichtsilicate, Tonminerale, Bentonite, Montmorillonite, Hectorite, Saponite und gefällte/pyrogenelkristalline/amorphe Kieselsäuren handelt.**

9. Flammwidrig ausgerüstete thermoplastische Kunststoff-Formmasse, hergestellt durch Einsatz der Flammschutzmittel-Zubereitung gemäß einem oder mehreren der Ansprüche 1 bis **8.**

10. Flammwidrig ausgerüstete thermoplastische Kunststoff-Formmasse nach Anspruch **9, dadurch gekennzeichnet, dass** es sich bei dem thermoplastischen Kunststoff um Polystyrol-HI (High-Impact), Polyphenylenether, Polyamide, Polyester, Polycarbonate und Blends oder Polymerblends von Typ ABS (Acrylnitril-Butadien-Styrol) oder PC/ABS (Polycarbonat/Acrylnitril-Butadien-Styrol) oder PPE/HIPS (Polyphenylenether/Polystyrol-HI) handelt.

11. Flammwidrige duroplastische Massen, **dadurch gekennzeichnet, dass** es sich hierbei um Formmassen, Beschichtungen oder Laminate aus duroplastischen Harzen handelt, die mittels der Fiammschutzmittei-Zubereitung gemäß einem oder mehreren der Ansprüche 1 bis **8** hergestellt wurden.

12. Flammwidrige duroplastische Massen gemäß Anspruch **11**, **dadurch gekennzeichnet, dass** es sich hierbei um ungesättigte Polyesterharze, Epoxidharze oder Polyurethane handelt.

13. Polymer-Formkörper, -Filme, -Fäden und -Fasern enthaltend eine Formmasse gemäß einem oder mehreren der Ansprüche **9 bis 12.**

## Claims

1. A flame retardant formulation, which contains, as flame retardant component A, from 91 to 99.9% by weight of phosphinate salt of the formula (I) and/or a diphosphinate salt of the formula (II) and/or polymers thereof 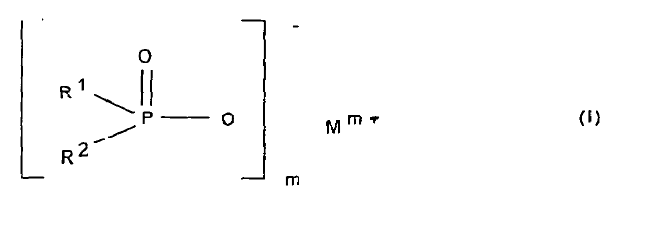 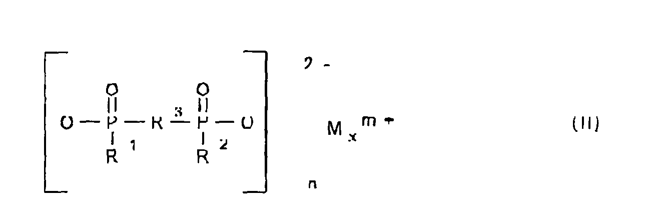 where
R¹, R² are the same or different and are each C₁-C₆-alkyl, linear or branched, and/or aryl;
R³ is C₁-C₁₀-alkylene, linear or branched, C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na and/or K;
m is from 1 to 4,
n is from 1 to 4;
x is from 1 to 4
and, as component B, from 0 to 30% by weight of a nitrogen-containing synergist or of a phosphorus/nitrogen flame retardant and, as component C, from 0.1 to 9% by weight of a liquid component, which is ethylene glycol, 1,2-propancdiol, 1,3-propancdiol and/or butanediols; ethylenediamine, propylenediamine, tetra-, penta- and/or hexamethylenediamine; styrene and/or methyl methacrylate; polyisocyanates such as tolylene 2,4-diisocyanate (2,4-TDI), tolylene 2,6-diisocyanate (2,6-TDI), 4,4'-diisocyanatodiphenylmethane (MDI), naphthalene 1,5-diisocyanate (NDI), hexamethylene 1,6-diisocyanate (IIDI) and/or isophorone diisocyanate (IPDI); polyethylene glycols, polypropylene glycols, polyether polyols, polyester polyols and/or polyisocyanates; solutions of polycondensates of saturated and unsaturated dicarboxylic acids and/or of anhydrides thereof with diols in styrene and/or methyl methacrylate, acetone, methyl ethyl ketone, alcohols, water, toluene, xylenes, esters, dimethylformamide, alkyl glykols and/or propylene glycol methyl ether acetate, diethylene glycol ethyl ether acetate, polyethylene glycol dimethyl ether, ethyl acetate, butyl acetate, dioxane, tetrahydrofuran, diethyl ether, dimethyl ether, methyl tert-butyl ether, alkanes, cycloalkanes, N-methylpyrrolidone, benzine, amyl acetate, carbon disulfide, dimethyl sulfoxide, dichloromethane, trichloromethane, carbon tetrachloride, nitromethane, N-dimethylacetamide, nitrobenzene; triethyl phosphate, triaryl phosphates, tetraphenyl resorcinoldiphosphate, dimethyl methylphosphonate and/or a polymer thereof with phosphorus pentoxide, phosphonate ester, (5-ethyl-2-methyl-dioxaphosphorinan-5-yl)methyl methyl methanephosphonate, phosphoric esters, pyrophosphoric esters, alkylphosphonic acids and/or oxyalkylated derivatives thereof.

2. The flame retardant formulation as claimed in claim 1, wherein R¹, R² are the same or different and are each methyl, ethyl, n-propyl, isopropyl, n-butyl, tert-butyl, n-pcntyl and/or phenyl.

3. The flame retardant formulation as claimed in claim 1 or 2, wherein R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

4. The flame retardant formulation as claimed in one or more of claims 1 to 3, wherein component B comprises melem, melam, melon and/or more highly condensed compounds thereof.

5. The flame retardant formulation as claimed in one or more of claims 1 to 3, wherein, component B comprises reaction products of melamine with polyphosphoric acid and/or reaction products of condensates of melamine with polyphosphoric acid or mixtures thereof.

6. The flame retardant formulation as claimed in claim 5, wherein the reaction products are dimelamine pyrophosphate, melamine polyphosphate, melem polyphosphate, melam polyphosphate, melon polyphosphate and/or mixed polysalts of this type.

7. A process for preparing the flame retardant formulation as claimed in one or more of claims 1 to 6, which comprises mixing in the solid components by means of a dissolver stirrer unit or a tumbling mixer.

8. A process for preparing the flame retardant formulation as claimed in one or more of claims 1 to 6, which comprises using additives which are sheet silicates, clay minerals, bentonites, montmorillonites, hectorites, saponites and precipitated/pyrogenic/ crystalline/amorphous silicas.

9. A flame-retardant thermoplastic molding composition, produced by using the flame retardant formulation as claimed in one or more of claims 1 to 8.

10. The flame-retardant thermoplastic molding composition as claimed in claim 9, wherein the thermoplastic comprises high-impact polystyrene, polyphenylene ethers, polyamides, polyesters, polycarbonates and blends or polyblends of the ABS (acrylonitrile-butadiene-styrene) or PC/ABS (polycarbonate/acrylonitrile-butadiene-styrene) or PPE/HIPS (polyphenylene ether/high-impact polystyrene) type.

11. A flame-retardant thermoset composition, which comprises molding compositions, coatings or laminates of thermoset resins, each of which have been produced by means of the flame retardant formulation as claimed in one or more of claims 1 to 8.

12. The flame-retardant thermoset composition as claimed in claim 11, which comprises unsaturated polyester resins, epoxy resins or polyurethanes.

13. A polymer molding, polymer film, polymer thread or polymer fiber comprising the molding composition as claimed in one or more of claims 9 to 12.

## Revendications

1. Compositions d'agents ignifuges, **caractérisées en ce qu'**elles contiennent comme composant ignifuge A 91 à 99,9% en poids de sel de l'acide phosphinique de formule (I) et/ou d'un sel d'acide diphosphinique de formule (II) et/ou de leurs polymères, 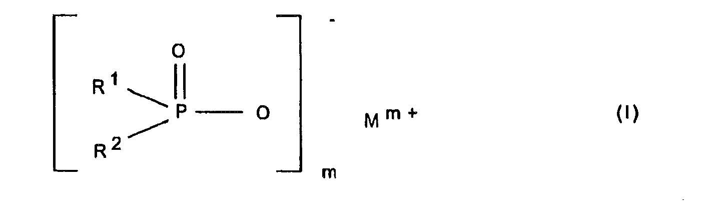 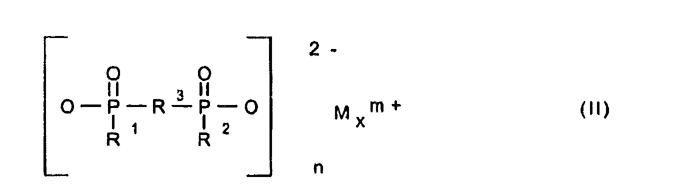 où
R¹, R² sont identiques ou différents et signifient C₁-C₆- alkyle, linéaire ou ramifié et/ou aryle ;
R³ signifie C₁-C₁₀-alkylène, linéaire ou ramifié, C₆- C₁₀-arylène, C₆-C₁₀-alkylarylène ou C₆-C₁₀- arylalkylène ;
M signifie Mg, Ca, Al, Sb, Sn, Ge, Ti, Zn, Fe, Zr, Ce, Bi, Sr, Mn, Li, Na et/ou K ;
m vaut 1 à 4 ;
n vaut 1 à 4 ;
x vaut 1 à 4
comme composant B 0 à 30% en poids d'un synergiste azoté ou d'un agent ignifuge phosphoré/azoté ainsi que comme composant C 0,1 à 9% en poids d'un composant liquide, où il s'agit d'éthylèneglycol, de 1,2-propanediol, de 1,3-propanediol et/ou de butanediols ; d'éthylènediamine, de propylènediamine, de tétraméthylènediamine, de pentaméthylènediamine et/ou d'hexaméthylènediamine ; de styrène et/ou de méthacrylate de méthyle ; de polyisocyanates tels que le 2,4-toluylènediisocyanate (2,4-TDI), le 2,6-toluylènediisocyanate (2,6-TDI), le 4,4'-diisocyanatodiphénylméthane (MDI), le naphtalène-1,5-diisocyanate (NDI), l'hexaméthylènediisocyanate-1,6 (HDI) et/ou l'isophoronediisocyanate (IPDI) ; de polyéthylèneglycols, de polypropylèneglycols, de polyétherpolyols, de polyesterpolyols et/ou de polyisocyanates ; de solutions de produits de polycondensation d'acides dicarboxyliques saturés et insaturés et/ou de leurs anhydrides avec des diols dans du styrène et/ou du méthacrylate de méthyle ; d'acétone, de méthyléthylcétone, d'alcools, d'eau, de toluène, de xylènes, d'esters, de diméthylformamide, d'alkylglycols et/ou d'acétate de méthyléther-propylèneglycol, d'acétate d'éthyléther-diéthylèneglycol, de polyéthylèneglycoldiméthyléther, d'acétate d'éthyle, d'acétate de butyle, de dioxanne, de tétrahydrofuranne, de diéthyléther, de diméthyléther, de méthyl-tert-butyléther, d'alcanes, de cycloalcanes, de N-méthylpyrrolidone, d'essence, d'acétate d'amyle, de disulfure de carbone, de diméthylsulfoxyde, de dichlorométhane, de trichlorométhane, de tétrachlorure de carbone, de nitrométhane, de N-diméthylacétamide, de nitrobenzène ; de phosphate de triéthyle, de phosphates de triaryle, d'ester tétraphénylique de l'acide résorcinolphosphorique, de diméthylméthylphosphonate et/ou de son polymère avec du pentoxyde de phosphore, d'esters de phosphonate, d'ester (5-éthyl-2-méthyl-dioxaphosphorinan-5-yl)méthylméthylique de l'acide méthanephosphonique, d'esters de l'acide phosphorique, de pyro-esters de l'acide phosphorique, d'acides alkylphosphoniques et/ou de leurs dérivés oxalkylés.

2. Composition d'agents ignifuges selon la revendication 1, **caractérisées en ce que** R¹, R² sont identiques ou différents et signifient méthyle, éthyle, n-propyle, iso-propyle, n-butyle, tert-butyle, n-pentyle et/ou phényle.

3. Composition d'agents ignifuges selon la revendication 1 ou 2, **caractérisées en ce que** R³ signifie méthylène, éthylène, n-propylène, iso-propylène, n-butylène, tert-butylène, n-pentylène, n-octylène ou n-dodécylène ; phénylène ou naphtylène ; méthyl-phénylène, éthyl-phénylène, tert-butylphénylène, méthyl-naphtylène, éthyl-naphtylène ou tert-butylnaphtylène ; phényl-méthylène, phényl-éthylène, phényl-propylène ou phényl-butylène.

4. Composition d'agents ignifuges selon l'une ou plusieurs des revendications 1 à 3, **caractérisées en ce qu'**il s'agit, pour le composant B, de mélem, de mélam, de mélon et/ou de composés de condensation supérieure.

5. Composition d'agents ignifuges selon l'une ou plusieurs des revendications 1 à 3, **caractérisées en ce qu'**il s'agit pour le composant B de produits de transformation de mélamine avec de l'acide polyphosphorique et/ou de produits de transformation de produits de condensation de la mélamine avec de l'acide polyphosphorique ou de mélanges de ceux-ci.

6. Composition d'agents ignifuges selon la revendication 5, **caractérisées en ce qu'**il s'agit pour les produits de transformation de dimélamine-pyrophosphate, de mélamine-polyphosphate, de mélem-polyphosphate, de mélam-polyphosphate, de mélon-polyphosphate et/ou de polysels mixtes de ce type.

7. Procédé pour la préparation d'une composition d'agents ignifuges selon l'une ou plusieurs des revendications 1 à 6, **caractérisé en ce que** le délayage des composants solides est réalisé au moyen d'un appareil d'agitation de type Dissolver ou d'un agitateur secoueur.

8. Procédé pour la préparation d'une composition d'agents ignifuges selon l'une ou plusieurs des revendications 1 à 6, **caractérisé en ce que** des additifs sont utilisés, où il s'agit de silicates à couches, de minéraux d'argile, de bentonite, de montmorillonite, d'hectorite, de saponite et de silices précipitées/pyrogènes/cristallines/amorphes.

9. Masse de moulage en matériau synthétique thermoplastique apprêtée de manière ininflammable, préparée par l'utilisation de la composition d'agents ignifuges selon l'une ou plusieurs des revendications 1 à 8.

10. Masse de moulage en matériau synthétique thermoplastique apprêtée de manière ininflammable selon la revendication 9, **caractérisée en ce qu'**il s'agit pour le matériau synthétique thermoplastique, de polystyrène-HI (High-Impact), de polyphénylénéthers, de polyamides, de polyesters, de polycarbonates et de mélanges ou de mélanges polymères de type ABS (acrylonitrile-butadiène-styrène) ou PC/ABS (polycarbonate/acrylonitrile-butadiène-styrène) ou PPE/HIPS (polyphénylène-éther/polystyrène-HI).

11. Masses thermodurcissables ininflammables, **caractérisées en ce qu'**il s'agit de masses de moulage, de revêtements ou de produits laminés en résines thermodurcissables, qui sont préparés au moyen de la composition d'agents ignifuges selon l'une ou plusieurs des revendications 1 à 8.

12. Masses thermodurcissables ininflammables selon la revendication 11, **caractérisées en ce qu'**il s'agit de résines de polyester insaturé, de résines époxyde ou de polyuréthanes.

13. Corps façonnés, films, fils et fibres polymères contenant une masse de moulage selon l'une ou plusieurs des revendications 9 à 12.
